(19) Europäisches Patentamt
European Patent Office
Office européen des brevets

(11) **EP 4 130 138 B1**

(12) **EUROPEAN PATENT SPECIFICATION**

(45) Date of publication and mention of the grant of the patent:
**04.10.2023 Bulletin 2023/40**

(21) Application number: **21190017.0**

(22) Date of filing: **06.08.2021**

(51) International Patent Classification (IPC):
***C08L 23/08*** *(2006.01)* ***C08F 210/16*** *(2006.01)*
***C08F 4/659*** *(2006.01)*

(52) Cooperative Patent Classification (CPC):
(C-Sets available)
**C08F 210/16; C08L 23/0815;** C08F 4/65912; C08F 4/65916; C08F 2420/07; C08L 2203/16; C08L 2205/025; C08L 2314/06 (Cont.)

(54) **POLYETHYLENE COPOLYMER COMPOSITION FOR A FILM LAYER**

POLYETHYLENCOPOLYMERZUSAMMENSETZUNG FÜR EINE FOLIENSCHICHT

COMPOSITION DE COPOLYMÈRE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023 Bulletin 2023/06**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**
- **HIRVONEN, Juulia**
  **06850 Kulloo (FI)**

(74) Representative: **TBK**
**Bavariaring 4-6**
**80336 München (DE)**

(56) References cited:
**WO-A1-2021/009191**
**US-A1- 2014 212 607**
**US-A1- 2018 305 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815, C08L 91/06;**
C08F 210/16, C08F 210/14, C08F 210/08, C08F 2500/12, C08F 2500/26

## Description

The present invention relates to a composition comprising a specific metallocene-catalysed multimodal polyethylene copolymer (P) and a polyethylene wax, to the use of the composition in film applications and to a film comprising the composition of the invention.

State of the art mLLDPE (metallocene catalysed linear low density polyethylene) is widely used everywhere in daily life, like packaging, due to its excellent cost / performance ratios. One of the famous drawback is the narrow molecular weight distribution and therefore less shear thinning, which leads to the problem in film conversion, e.g. limiting the throughput. In addition, higher throughputs in the plastic processing industry are further limited by melt flow instabilities, which change the appearance and properties of the final product and have economic and also environmental consequences. One important parameter here is the critical shear rate [$s^{-1}$] (CSR) at which the melt flow instability starts.

Processing instabilities are i.a. influenced by the molecular structure of the polymer and presence of special additives.

It is desirable, if the critical shear rate (CSR) is as high as possible, in order to improve the processing of the polymer melt.

One common solution for improving the processability of a polymer melt is the addition of so-called processing aids. Polymer processing aids (PPA) are typically used to reduce melt fracture of polymers, especially of linear polyethylene. Melt fracture is a type of flow instability that begins as a roughening of the surface (shark skin) and at higher output can lead to severe distortion of the polymer. PPAs help extend the critical shear rate at which melt fracture occurs, allowing higher line speeds.

Unfortunately, the majority of suitable processing aids are fluoro- based polymers, which are due to their fluoro content under concerns in view of Human and Environmental Health.

As mentioned above, the processability is also influenced by the molecular structure. Multimodal PE polymers with two or more different polymer components are known to be better to process, but e.g. melt homogenisation of the multimodal PE may be problematic resulting to inhomogeneous final product evidenced e.g. with high gel content of the final product.

Multimodal PE polymers are known in the art.

WO 2021009189, WO 2021009190 and WO 2021009191 of Borealis disclose a process for preparing multimodal PE polymers in two loop reactors and one gas phase reactor in the presence of a silica supported metallocene catalyst based on the metallocene complex bis(1-methyl-3-n-butylcyclopentadienyl) zirconium (IV) dichloride.

The polymers produced in the Examples have a total density of 938 or 939 kg/$m^3$. The $MFR_2$ (190°C, 2.16 kg, ISO 1133) of the polymer components produced in the first loop reactor is about 22 or 23 g/10 min.

Film properties, like impact strength (dart drop impact, DDI) or processing parameters, like the critical shear rate are not mentioned at all.

Also WO 2021009192 discloses such a process. The polymer produced in the Examples has an even higher density of 951 kg/$m^3$. The $MFR_2$ (190°C, 2.16 kg, ISO 1133) of the polymer component produced in the first loop is 32 g/10 min.

Film properties, like impact strength (dart drop impact, DDI) or processing parameters, like the critical shear rate are not mentioned at all.

It is desirable to maximise the processability of multimodal PE polymers, which have an improved melt flow stability expressed by a high critical shear rate (CSR). It goes without saying that any manipulation of the polymer properties to enable improved processability should not be detrimental to the final film properties.

Such multimodal PE polymers should furthermore have a low coefficient of friction (COF) and films made therefrom should have improved mechanical properties.

Although it is in principle known that polyethylene waxes can be used as processing aid for polyolefins, there is still the need to find improved solutions, which lead at the same time to an increase in processability, increase in mechanical properties and reduction of the coefficient of friction (CoF) of the resulting blend.

The inventors have now found, that a blend of a metallocene-catalysed multimodal polyethylene copolymer (P) made with a specific metallocene catalyst and having a specific polymer design with a polyethylene wax has an improved processability, which can be seen in terms of higher possible critical shear rate (CSR).

Such blends have in addition a lower coefficient of friction (COF).

The films made from such a blend have in addition an improved impact strength, i.e. a higher DDI.

## Description of the invention

The present invention is therefore directed to a polyethylene polymer composition comprising

(1) 97.0 to 99.9 wt% of a metallocene-catalysed multimodal polyethylene copolymer (P), which consists of

(i) 30.0 to 60.0 wt% of an ethylene polymer component (A), and
(ii) 40.0 to 70.0 wt% of an ethylene polymer component (B),

whereby the ethylene polymer component (A) has

a density in the range of from 920 to 980 kg/$m^3$,
an $MFR_2$ (190°C, 2.16 kg, ISO 1133) in the range of from 2.0 to 250.0 g/10 min,

the ethylene polymer component (B) has

a density in the range of from 880 to 970 kg/$m^3$,
an $MFR_2$ (190°C, 2.16 kg, ISO 1133) in the range of from 0.01 to 1.0 g/10 min,

whereby the multimodal polyethylene copolymer (P) has

a density in the range of from 910 to 970 kg/$m^3$,
an $MFR_2$ (190°C, 2.16 kg, ISO 1133) in the range of from 0.1 to 3.0 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50 and

(2) 0.1 to 3.0 wt% of a polyethylene wax, wherein component (1) and (2) add up to 100.0 wt%.

In an embodiment of the present invention, the ethylene polymer component (A) is an ethylene-1-butene polymer and the ethylene polymer component (B) is an ethylene-1-hexene polymer.
In another embodiment of the present invention, the ethylene polymer component (A) of the metallocene-catalysed multimodal polyethylene copolymer (P) consists of an ethylene polymer fraction (A-1) and an ethylene polymer fraction (A-2), wherein the density of fractions (A-1) and (A-2) is in the range of from 920 to 980 kg/$m^3$ and the $MFR_2$ (190°C, 2.16 kg, ISO 1133) is in the range of from 2.0 to 40 g/10 min and wherein the density and/or the $MFR_2$ (190°C, 2.16 kg, ISO 1133) of ethylene polymer fractions (A-1) and (A-2) may be the same or may be different.
Unexpectedly the above blend of the invention provides improved mechanical properties to films such as higher dart drop impact strength and lower coefficient of friction (CoF).

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.
Whenever the terms "including" or "having" are used, these terms are meant to be equivalent to "comprising" as defined above.
Where an indefinite or definite article is used when referring to a singular noun, e.g. "a", "an" or "the", this includes a plural of that noun unless something else is specifically stated.
Metallocene catalysed multimodal polyethylene copolymer is defined in this invention as multimodal polyethylene copolymer (P), which has been produced in the presence of a metallocene catalyst.
Term "multimodal" in context of multimodal polyethylene copolymer (P) means herein multimodality with respect to melt flow rate (MFR) of the ethylene polymer components (A) and (B), i.e. the ethylene polymer components (A) and (B) have different MFR values. The multimodal polyethylene copolymer (P) can have further multimodality with respect to one or more further properties between the ethylene polymer components (A) and (B), as will be described later below.
The multimodal polyethylene copolymer (P) of the invention as defined above, below or in claims is also referred herein shortly as "multimodal PE" or "multimodal copolymer (P)".
Polyethylene waxes are basically low molecular weight polymers of ethylene, produced via the polymerization of ethylene, i.e. are low molecular weight polyethylenes consisting of ethylene monomer chains. Polyethylene wax is classified into several different categories based on its preparation method, density, size, and state. Because of it's low molecular weight polyethylene wax has wax like physical characteristics that include properties such as low viscosity, high hardness (brittleness) and relatively high melt point.
The following preferable embodiments, properties and subgroups of multimodal PE and the ethylene polymer components (A) and (B) thereof, as well as the ethylene polymer fractions (A-1) and (A-2) and the film of the invention

including the preferable ranges thereof, are independently generalisable so that they can be used in any order or combination to further define the preferable embodiments of the multimodal PE and the article of the invention.

**Multimodal PE as well as ethylene polymer component (A) and (B) and ethylene polymer fractions (A-1) and (A-2)**

The metallocene produced multimodal polyethylene copolymer (P) is referred herein as "multimodal", since the ethylene polymer component (A), optionally including ethylene polymer fractions (A-1) and (A-2), and ethylene polymer component (B) have been produced under different polymerization conditions resulting in different Melt Flow Rates (MFR, e.g. $MFR_2$). I.e. the multimodal PE is multimodal at least with respect to difference in $MFR_2$ of the ethylene polymer components (A) and (B).
The metallocene produced multimodal polyethylene copolymer (P) consists of

(i) 30.0 to 60.0 wt% of an ethylene polymer component (A), and
(ii) 40.0 to 70.0 wt% of an ethylene polymer component (B).

The amount of (A) and (B) add up to 100.0 wt%.
In an embodiment of the present invention, the ethylene polymer component (A) consists of an ethylene polymer fraction (A-1) and (A-2).
The ethylene polymer component (A) and the ethylene polymer (B) are preferably a copolymer of ethylene and a comonomer being selected from $C_4$ to $C_{12}$ $\alpha$-olefins, more preferably $C_4$ to $C_8$ $\alpha$-olefins and yet more preferably $C_4$ to $C_6$ $\alpha$-olefins.
Preferably, the comonomer of ethylene polymer component (A) is different from the comonomer of ethylene polymer component (B).
In an embodiment of the present invention, the ethylene polymer component (A) is, thus an ethylene-1-butene polymer and the ethylene polymer component (B) is an ethylene-1-hexene polymer.
In case that the ethylene-1-butene polymer component (A) consists of ethylene polymer fractions (A-1) and (A-2), the $MFR_2$ of the ethylene polymer fractions (A-1) and (A-2) may be different from each other or may be the same.
The ethylene polymer fractions (A-1) and (A-2) have an $MFR_2$ (190°C, 2.16 kg, ISO 1133) in the range of 2.0 to 250.0 g/10 min, preferably of 2.5 to 100.0 g/10 min, more preferably of 3.0 to 30.0 g/10 min, even more preferably of 3.5 to 10.0 g/10 min.
The $MFR_2$ of the ethylene polymer components (A) and (B) are different from each other. The ethylene polymer component (A) has an $MFR_2$ (190°C, 2.16 kg, ISO 1133) in the range of 2.0 to 250 g/10 min, preferably of 2.5 to 100.0 g/10 min, more preferably of 3.0 to 30.0 g/10 min, even more preferably of 3.5 to 10.0 g/10 min.
The ethylene polymer component (B) has an $MFR_2$ (190°C, 2.16 kg, ISO 1133) in the range of 0.01 to 1.0 g/10 min, preferably of 0.05 to 0.9 g/10 min, more preferably of 0.08 to 0.8 g/10 min and even more preferably of 0.1 to 0.7 g/10 min.
The $MFR_2$ (190°C, 2.16 kg, ISO 1133) of the multimodal copolymer (P) is in the range of 0.1 to 3.0 g/10 min, preferably 0.2 to 2.5 g/10 min, more preferably 0.3 to 2.0 g/10 min and even more preferably 0.5 to 1.8.
The multimodal copolymer (P) has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 26 to 35.
In an embodiment of the invention it is preferred that the ratio of the $MFR_2$ (190°C, 2.16 kg, ISO 1133) of the ethylene polymer component (A), preferably the ethylene-1-butene polymer component (A) to the $MFR_2$ (190°C, 2.16 kg, ISO 1133) of the final multimodal copolymer (P) is at least 1.6 to 40.0, preferably 2.0 to 30.0, more preferably of 2.5 to 20.0 and even more preferably 3.0 to 10.0.
Naturally, in addition to multimodality with respect to, i.e. difference between, the $MFR_2$ of ethylene polymer components (A) and (B), the multimodal PE of the invention can also be multimodal e.g. with respect to one or both of the two further properties:
multimodality with respect to, i.e. difference between,

- the comonomer type and/or content(s) present in the ethylene polymer components (A) and (B); and/or
- the density of the ethylene polymer components (A) and (B).

Preferably, the multimodal copolymer (P) is further multimodal with respect to the comonomer type of the ethylene polymer components (A) and (B).
As stated above, in a preferred embodiment of the present invention, the ethylene polymer component (A) is an ethylene-1-butene polymer and the ethylene polymer component (B) is an ethylene-1-hexene polymer.
The comonomer type for the polymer fractions (A-1) and (A-2) is the same, thus preferably both fractions therefore have 1-butene as comonomer.

Even more preferably the multimodal polymer (P) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 980 kg/$m^3$, preferably of 925 to 960 kg/$m^3$, more preferably 930 to 945 kg/$m^3$ and/or the density of the ethylene polymer component (B) is of in the range of 880 to 970 kg/$m^3$, preferably of 885 to 940 kg/$m^3$ and more preferably of 890 to 915 kg/$m^3$.

The polymer fractions (A-1) and (A-2) have a density in the range of from 920 to 980 kg/$m^3$, preferably of 925 to 960 kg/$m^3$, more preferably of 930 to 950 kg/$m^3$, and most preferred 935 to 945 kg/$m^3$.

The density of polymer fraction (A-1) and (A-2) may be the same or may be different from each other.

The metallocene catalysed multimodal copolymer (P) is preferably a linear low density polyethylene (LLDPE) which has a well known meaning.

The density of the multimodal copolymer (P) is in the range of 910 to 970 kg/$m^3$, preferably of 912.0 to 950 kg/$m^3$, more preferably of 915.0 to 930.0 kg/$m^3$ and yet more preferably of 916 to 925 kg/$m^3$.

More preferably the multimodal copolymer (P) is multimodal at least with respect to, i.e. has a difference between, the $MFR_2$, the comonomer type and/or content as well as with respect to, i.e. has a difference between the density of the ethylene polymer components, (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 35.0 to 50.0 wt% based on the multimodal copolymer (P), preferably in an amount of 36.0 to 48.0 wt% and even more preferably in an amount of 38.0 to 45.0 wt%.

Thus, the ethylene polymer component (B) is present in an amount of 50.0 to 65.0 wt% based on the multimodal copolymer (P), preferably in an amount of 52.0 to 64.0 wt% and more preferably in an amount of 55.0 to 62.0 wt%.

The metallocene catalysed multimodal copolymer (P), can be produced in a 2-stage process, preferably comprising a slurry reactor (loop reactor), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (P).

In case that the ethylene component (A) of the multimodal copolymer (P) consists of ethylene polymer fractions (A-1) and (A-2), the multimodal copolymer (P) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE process or the Borstar PE 3G process.

The metallocene catalysed multimodal copolymer (P) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal copolymer (P). This can counted as part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

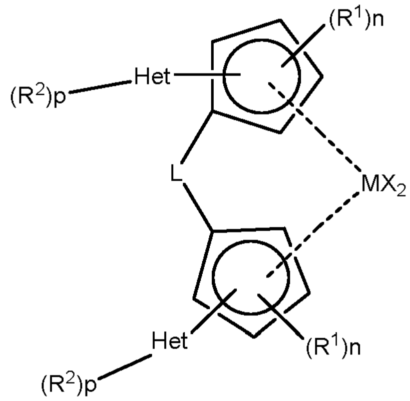

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure of formula (I')

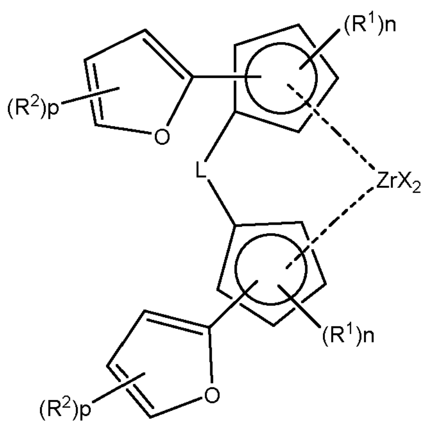

(I′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

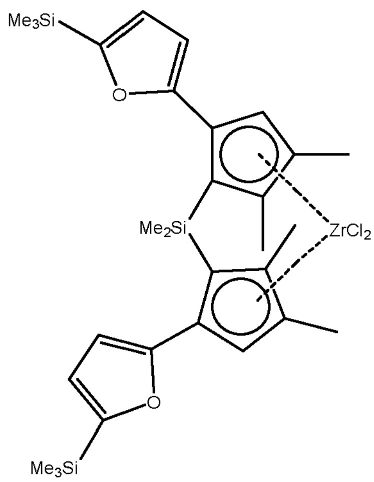
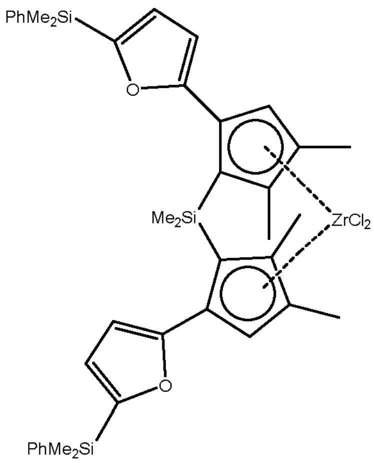
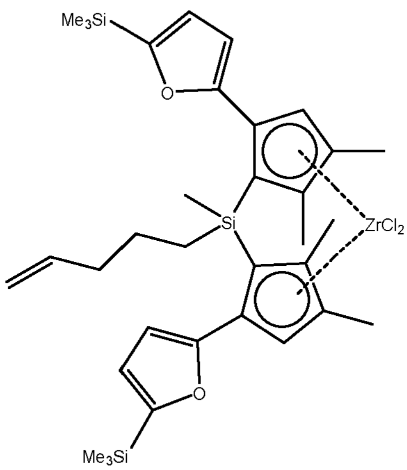
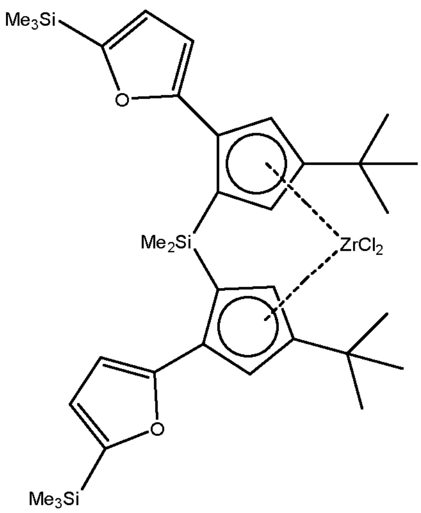

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (P) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined

amount of the metallocene catalysed multimodal copolymer (P) and the other polymer component(s).

The optional additives and fillers and the used amounts thereof are conventional in the field of film applications. Examples of such additives are, among others, antioxidants, UV-stabilizers, pigments, fillers, antistatic additives, antiblock agents, nucleating agents and acid scavengers.

In an embodiment of the present invention the metallocene catalysed multimodal copolymer (P) does not contain any fluoro based polymer processing aid.

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100 wt%).

**Polyethylene wax**

The polyethylene polymer composition of the present invention comprises in addition to the multimodal copolymer (P) 0.1 to 3.0 wt% of a polyethylene wax.

The amount of added polyethylene wax is preferably in the range of 0.2 to 2.5 wt%, more preferably 0.3 to 2.0 wt% and even more preferably 0.4 to 1.5 wt%.

The polyethylene wax in the present invention refers to a homopolymer of ethylene, a copolymer of ethylene and an $\alpha$-olefin, or a blended product thereof.

The polyethylene wax may have a weight-average molecular weight (determined via a viscometric method) of 1000 to 20000 g/mol, preferably 1500 to 15000 and more preferably 2000 to 10000.

The polyethylene wax may be a high-density polyethylene wax with a density 960 kg/m$^3$ or more, a medium-density polyethylene wax with a density ranging from 940 to 950 kg/m$^3$ or a low-density polyethylene wax with a density of 930 kg/m$^3$ or less. Preferably, a low-density polyethylene wax with a density in the range of 900 to 930 kg/m$^3$ is used.

Density is measured in accordance with JIS K6760 or ISO 1183 (dependent on the producer of the wax).

Suitable polyethylene waxes may have a melt viscosity measured at 140°C in the range of from 15 to 10000 mPa.s, preferably in the range of 20 to 8 000 mPa.s, more preferably in the range of 50 to 7 000 mPa.s and even more preferably in the range of 60 to 6 500 mPa.s. Melt viscosity can be measured according to DIN 53019.

The polyethylene waxes may alternatively or in addition be characterized by a drop point measured according to ASTM 3954 in the range of 115 to 140°C, preferably 118 to 135°C and more preferably 120 to 132°C and/or a softening point measured according to JIS K 2207 in the range of 90 to 140°C, preferably 92 to 135°C, more preferably 95 to 130°C and yet more preferably 98 to 125°.

The polyethylene wax may be prepared by using a Ziegler-Natta catalyst or by using a metallocene catalyst.

Such polyethylene waxes are commercially available.

Specific examples of the commercially available polyethylene wax include the Hi-WAX serie and the Excerex serie from Mitsui Chemicals or the Licowax PE family and the Licocene PE family from Clarinat.

The polyethylene polymer composition according to the present invention has an improved melt-processability, expressed by a critical shear rate (CSR) determined according to ISO 11443 of at least 400 s$^{-1}$, preferably of at least 410 s$^{-1}$, and more preferably of at least 420 s$^{-1}$. A suitable upper limit of the critical shear rate (CSR) is 1200 s$^{-1}$, preferably 1100 s$^{-1}$ and more preferably 1000 s$^{-1}$.

The higher possible critical shear rate (CSR) is not achieved at the expense of good mechanical properties.

**Film of the invention**

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives can optionally be added to the metallocene catalysed multimodal copolymer (P) during the film preparation process. Preferably, the at least one layer of the invention comprises at least 50 wt%, more preferably at least 60 wt%, even more preferably at least 70 wt%, yet more preferably at least 80 wt%, of the metallocene catalysed multimodal copolymer (P) of the invention. Most preferably said at least one layer of the film of invention consists of the metallocene catalysed multimodal copolymer (P).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 μm or less, typically 6 to 200 μm, preferably 10 to 180 μm, e.g. 20 to 150 μm or 20 to 120 μm. If desired, the polymer of the invention enables thicknesses of less than 100 μm, e.g. less than 50 μm. Films of the invention with thickness even less than 20 μm can also be produced whilst maintaining good mechanical properties.

Furthermore, the present invention is also directed to the use of the inventive article as packing material, in particular as a packing material for food and/or medical products.

The films of the invention are characterized by a dart-drop impact strength (DDI) determined according to ASTM D1709, method A on a 40 μm monolayer test blown film of at least 300 g up to 2500 g, preferably 500 g to 2300 g, more preferably 700 g to 2000 g and yet more preferably 800 to 1800 g.

In an embodiment, the films of the present invention may have a haze (measured on a 40 μm monolayer test blown film according to ASTM D 1003-00) of below 30 %, preferably between 2 % and 28 %, more preferably between 5 % and 26 %.

In a further embodiment the films according to the present invention have a Coefficient of Friction (CoF) as a measure of the frictional behaviour of the film (determined using a method according to ISO 8295) of below 0.83, preferably in the range of from 0.50 to 0.82.

The invention will be further described with reference to the following non-limiting examples.

**Determination** methods:

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation of MFR2 of Component B and of Fraction (A-2)*

$$logA = x \cdot logB + (1-x) \cdot logC$$

$$C = 10^\wedge \frac{(logA - x.logB)}{(1-x)}$$

For Component B:

B = $MFR_2$ of Component (A)
C = $MFR_2$ of Component (B)

A = final $MFR_2$ (mixture) of multimodal polyethylene copolymer (P)
X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (=Component (A))
X = weight fraction of the 1st fraction (A-1)

**Density**

Density of the polymer was measured according to ASTM; D792, Method B (density by balance at 23°C) on compression moulded specimen prepared according to EN ISO 1872-2 and is given in $kg/m^3$.

**Dart drop strength (DDI)**

Dart-drop was measured using ASTM D1709, method A (Alternative Testing Technique) from the films as produced indicated below. A dart with a 38 mm diameter hemispherical head was dropped from a height of 0.66 m onto a film clamped over a hole. Successive sets of twenty specimens were tested. One weight was used for each set and the weight was increased (or decreased) from set to set by uniform increments. The weight resulting in failure of 50 % of the specimens was calculated and reported.

**Haze**

Haze was determined according to ASTM D 1003-00

**Coefficient of Friction (CoF)**

The dynamic Coefficient of Friction (CoF) as a measure of the frictional behaviour of the film was determined using a method according to ISO 8295.

**Critical Shear rate (CSR)**

Determination of the beginning of flow instabilities at high shear rates was determined by using a RHEOGRAPH 75 high-pressure capillary rheometers (GÖTTFERT) according to ISO 11443 at 190°C. Capillary UD: 30/2.

**Film sample preparation**

The test films consisting of the inventive composition and respective comparative compositions of 40 μm thickness, were prepared using a Collin 30 lab scale mono layer blown film line.The film samples were produced at 194°C, a 1:2.5 blow-up ratio, frostline distance of 120 mm.

**Experimental part**

**Cat.Example: Catalyst preparation for Inventive Examples (CAT1)**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition,

stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Catalyst for Comparative Examples (CAT2)**

CAT2 was prepared according to the same procedure as for CAT1 except for silica loading was 5 kg, MAO loading was 6.84 kg of a 30 wt% solution in toluene and metallocene was bis(1-n-butyl-3-methylcyclopentadienyl)zirconium dichloride (loading of 0.481 kg of a 25 wt% solution in toluene). The process parameters were adjusted accordingly.

**Polymerization: Inventive multimodal polyethylene copolymer (P) with 1-butene and 1-hexene comonomers and comparative Examples**

Borstar pilot plant with a 3-reactor set-up (loop1 - loop2 - GPR 1) and a prepolymerization loop reactor.

The inventive multimodal copolymers (P) of example 1 (IE1) and the comparative copolymer were produced by using the polymerization conditions as given in Table 1.

**Table 1:** Polymerization conditions

| | IE1 LLDPE-1 | CE1 LLDPE-2 |
|---|---|---|
| **Prepoly reactor** | | |
| Catalyst | CAT1 | CAT2 |
| Catalyst feed (g/h) | 23.4 | 48.0 |
| Temp. (°C) | 50 | 50 |
| Press. (kPa) | 5643 | 5687 |
| C2 (kg/h) | 4.0 | 4.0 |
| H2(g/h) | 0.04 | 0.04 |
| C4 (g/h) | 87.9 | 164.3 |
| Split (wt%) | 3.4 | 3.5 |
| **loop 1 Fraction (A-1)** | | |
| Temp. (°C) | 85 | 85 |
| Press. (kPa) | 5526 | 5530 |
| C2 conc. (mol%) | 4.5 | 2.9 |
| H2/C2 ratio (mol/kmol) | 0.52 | 0.28 |
| C4/C2 ratio (mol/kmol) | 44.9 | 82.3 |
| Split (wt%) | 17.8 | 17.8 |
| Density (kg/m3) of loop 1 material (fraction (A-1)) | 940.9 | 940.3 |
| MFR2 (g/10 min) of loop 1 material (fraction (A-1)) | 5.8 | 5.9 |
| **loop 2** | | |
| Temp. (°C) | 85 | 85 |
| Press. (kPa) | 5334 | 5336 |
| C2 conc. (mol%) | 4.4 | 3.1 |
| H2/C2 ratio (mol/kmol) | 0.40 | 0.08 |
| C4/C2 ratio (mol/kmol) | 31.0 | 91.9 |
| Split (wt%) | 20.9 | 20.5 |
| Density (kg/m3) after loop 2 (component (A)) | 939.7 | 941.0 |
| MFR2 (g/10 min) after loop 2 (component (A)) | 6.1 | 6.5 |
| MFR2 (g/10 min) of loop 2 material (fraction (A-2)) | 6.4 | 6.0 |

| | | |
|---|---|---|
| Density (kg/m3) of loop 2 material (fraction (A-2)) | 938.5 | 941.7 |
| **GPR** | | |
| Temp. (°C) | 75 | 75 |
| Press. (kPa) | 1997 | 2000.0 |
| H2/C2 ratio (mol/kmol) | 1.05 | 0.17 |
| C6/C2 ratio (mol/kmol) | 9.99 | 28.6 |
| Split (wt%) | 57.8 | 58.2 |
| MFR2 (g/10 min) of GPR material (Component (B)) | 0.5 | 0.6 |
| Density (kg/m3) of GPR material (Component (B)) | 902.3 | 905 |
| **Pellets** | | |
| Density (kg/m$^3$) | 918.1 | 919.9 |
| $MFR_2$ (g/10 min) | 1.39 | 1.6 |
| $MFR_{21}$ (g/10 min) | 39.9 | 30.4 |
| $MFR_{21}/MFR_2$ | 28.7 | 19.2 |
| $MFR_{loop\ (Component\ A)}MFR_2$ final (pellet) | 4.39 | 3.92 |

The polymers were mixed with 0.05 wt% of Irganox 1010 (BASF) 0.2 wt% of Irgafos 168 (BASF) and processing aid, compounded and extruded under nitrogen atmosphere to pellets by using a twin screw extruder ZSK18; melt temperature 192°C.

The kind and amount of processing aids can be seen in Table 2.

The processing aids used were:

PPA-1: Excerex 30050B, commercially available from Mitsui
PPA-2: HI-WAX 720P, commercially available from Mitsui
PPA3: Dynamar FX 5922 commercially available from 3M

**Table 2**: Material properties of inventive compositions and comparative compositions, as well as film parameters

| **Material** | **IE1** | **IE2** | **IE3** | **CE1** | **CE2** | **CE3** |
|---|---|---|---|---|---|---|
| LLDPE-1 | 99.25 | 98.75 | 99.25 | | 99.973 | 99.75 |
| LLDPE-2 | | | | 99.25 | | |
| PPA-1 | 0.5 | 1.0 | - | 0.5 | - | - |
| PPA-2 | - | - | 0.5 | | - | - |
| PPA-3 | - | - | - | - | 0.027 | - |
| **Film** | IE1 | IE2 | IE3 | CE1 | CE2 | CE3 |
| DDI (g) | 825 | 859 | 830 | 881 | 742 | n.p. |
| CoF | 0.81 | 0.62 | 0.81 | 0.99 | 0.87 | 0.83 |
| Haze (%) | 19.8 | 20.8 | 24.9 | 34.2 | 19.3 | 17.6 |
| CSR ($s^{-1}$) | 576 | 432 | 576 | 158 | 403 | 360 |
| n.p. not possible; i.e. without addition of any processing aid the film thickness distribution is bad, and DDI cannot be measured correctly. | | | | | | |

From the above table it can be clearly seen, that films consisting of the inventive composition (combination of specific polymer design made with specific metallocene and polyerthylene wax) show a higher or comparable DDI and lower CoF compared to the comparative examples.

Furthermore, such films can be processed with clearly higher critical shear rate.

## Claims

1. A polyethylene polymer composition comprising

(1) 97.0 to 99.9 wt% of a metallocene-catalysed multimodal polyethylene copolymer (P), which consists of

(i) 30.0 to 60.0 wt% of an ethylene polymer component (A), and
(ii) 40.0 to 70.0 wt% of an ethylene polymer component (B),
whereby the ethylene polymer component (A) has

a density in the range of from 920 to 980 kg/$m^3$,
an $MFR_2$ (190°C, 2.16 kg, ISO 1133) in the range of from 2.0 to 250.0 g/10 min,

the ethylene polymer component (B) has

a density in the range of from 880 to 970 kg/$m^3$,
an $MFR_2$ (190°C, 2.16 kg, ISO 1133) in the range of from 0.01 to 1.0 g/10 min;

whereby the multimodal polyethylene copolymer (P) has

a density in the range of from 910 to 970 kg/$m^3$,
an $MFR_2$ (190°C, 2.16 kg, ISO 1133) in the range of from 0.1 to 3.0 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50 and

(2) 0.1 to 3.0 wt% of a polyethylene wax, wherein components (1) and (2) add up to 100.0 wt%.

2. The composition according to claim 1, wherein the ethylene polymer component (A) consists of an ethylene polymer fraction (A-1) and (A-2), wherein the density of fractions (A-1) and (A-2) is in the range of from 920 to 980 kg/$m^3$ and the $MFR_2$ (190°C, 2.16 kg, ISO 1133) is in the range of from 2.0 to 250 g/10 min and wherein the density and/or the $MFR_2$ (190°C, 2.16 kg, ISO 1133) of ethylene polymer fractions (A-1) and (A-2) may be the same or may be different.

3. The composition according to claim 1 or 2, wherein the ethylene polymer component (A) and the ethylene polymer (B) are preferably a copolymer of ethylene and a comonomer being selected from $C_4$ to $C_{12}$ $\alpha$-olefins, more preferably $C_4$ to $C_8$ $\alpha$-olefins and yet more preferably $C_4$ to $C_6$ $\alpha$-olefins;
preferably, the comonomer of ethylene polymer component (A) is different from the comonomer of ethylene polymer component (B), more preferably, the ethylene polymer component (A) is, thus an ethylene-1-butene polymer and the ethylene polymer component (B) is an ethylene-1-hexene polymer.

4. The composition according to any of the preceding claims, wherein the ethylene polymer component (A) of the metallocene-catalysed multimodal polyethylene copolymer (P) has an $MFR_2$ (190°C, 2.16 kg, ISO 1133) of 2.5 to 100.0 g/10 min, preferably of 3.0 to 30.0 g/10 min, more preferably of 3.5 to 10.0 g/10 min and
the ethylene polymer component (B) of the metallocene-catalysed multimodal polyethylene copolymer (P) has an $MFR_2$ (190°C, 2.16 kg, ISO 1133) of 0.05 to 0.9 g/10 min, preferably of 0.08 to 0.8 g/10 min and more preferably of 0.1 to 0.7 g/10 min.

5. The composition according to any of the preceding claims, wherein the multimodal copolymer (P) has a ratio of the $MFR_{21}$ (190°C, 21.6 kg, ISO 1133) to $MFR_2$ (190°C, 2.16 kg, ISO 1133), $MFR_{21}/MFR_2$, in the range of from 22 to 50, preferably from 25 to 40, more preferably from 26 to 35 and/or
a ratio of the $MFR_2$ (190°C, 2.16 kg, ISO 1133) of ethylene polymer component (A) to the $MFR_2$ (190°C, 2.16 kg, ISO 1133) of the final multimodal copolymer (P) of at least 1.6 to 40.0, preferably 2.0 to 30.0, more preferably 2.5 to 20.0 and even more preferably 3.0 to 10.0.

6. The composition according to any of the preceding claims, wherein the multimodal copolymer (P) is produced in the presence of metallocene complex of formula (I):

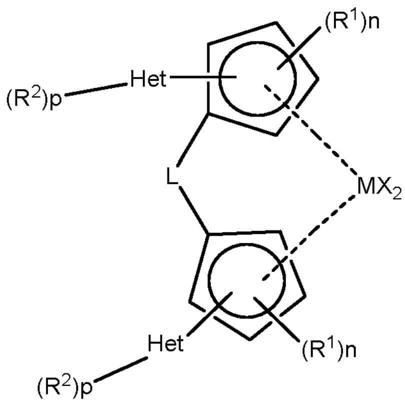

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -R'$_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -Si(R)$_3$ group;
each R is $C_{1-10}$-alkyl or phenyl group optionally substituted by 1 to 3 $C_{1-6}$-alkyl groups; and
each p is 0 to 1.

**7.** The composition according to any of the preceding claims, wherein the amount of added polyethylene wax is in the range of 0.2 to 2.5 wt%, preferably 0.3 to 2.0 wt% and more preferably 0.4 to 1.5 wt%.

**8.** The composition according to any of the preceding claims, wherein the polyethylene wax is a homopolymer of ethylene, a copolymer of ethylene and an $\alpha$-olefin, or a blended product thereof and may be prepared by using a Ziegler-Natta catalyst or by using a metallocene catalyst.

**9.** The composition according to any of the preceding claims, wherein the polyethylene wax may have a weight-average molecular weight (determined via a viscometric method) of 1000 to 20000 g/mol, preferably 1500 to 15000 and more preferably 2000 to 10000 and/or may have a melt viscosity measured at 140°C in the range of from 15 to 10 000 mPa.s, preferably in the range of 20 to 8000 mPa.s, more preferably in the range of 50 to 7000 mPa.s and even more preferably in the range of 60 to 6 500 mPa.s.

**10.** The composition according to any of the preceding claims, wherein the composition does not contain any fluoro based polymer processing aid.

**11.** The composition according to any of the preceding claims, wherein the composition has an improved processability expressed by a critical shear rate (CSR) determined according to ISO 11443 of at least 400 $s^{-1}$, preferably of at least 410 $s^{-1}$, and more preferably of at least 420 $s^{-1}$ up to 1200 $s^{-1}$, preferably up to 1100 $s^{-1}$ and more preferably up to 1000 $s^{-1}$.

**12.** Film comprising the composition according to any of the preceding claims 1 to 11.

**13.** Film according to claim 12, wherein the film is **characterized by** a dart-drop impact strength (DDI) determined according to ASTM D1709, method A on a 40 $\mu$m monolayer test blown film of at least 300 g up to 2500 g, preferably 500 g to 2300 g, more preferably 700 g to 2000 g and yet more preferably 800 to 1800 g.

**14.** Film according to claim 12 or 13, wherein the film is **characterized by** a Coefficient of Friction (CoF) as a measure of the frictional behaviour of the film (determined using a method according to ISO 8295) of below 0.83, preferably in the range of from 0.50 to 0.82.

15. Use of a film according to any of the preceding claims 12 to 14 as packing material, in particular as a packing material for food and/or medical products.

## Patentansprüche

1. Polyethylenpolymerzusammensetzung, umfassend

(1) 97,0 bis 99,9 Gew.-% eines Metallocen-katalysierten multimodalen Polyethylen-Copolymers (P), das besteht aus

(i) 30,0 bis 60,0 Gew.-% einer Ethylenpolymerkomponente (A), und
(ii) 40,0 bis 70,0 Gew.-% einer Ethylenpolymerkomponente (B),
wobei die Ethylenpolymerkomponente (A) aufweist

eine Dichte im Bereich von 920 bis 980 $kg/m^3$,
einen $MFR_2$-Wert (190°C, 2,16 kg, ISO 1133) im Bereich von 2,0 bis 250,0 g/10 min,

die Ethylenpolymerkomponente (B) aufweist

eine Dichte im Bereich von 880 bis 970 $kg/m^3$,
einen $MFR_2$ (190°C, 2,16 kg, ISO 1133) im Bereich von 0,01 bis 1,0 g/10 min;

wobei das multimodale Polyethylen-Copolymer (P) aufweist

eine Dichte im Bereich von 910 bis 970 $kg/m^3$,
einen $MFR_2$ (190°C, 2,16 kg, ISO 1133) im Bereich von 0,1 bis 3,0 g/10 min und
ein Verhältnis von $MFR_{21}$ (190°C, 21,6 kg, ISO 1133) zu $MFR_2$ (190°C, 2,16 kg, ISO 1133), $MFR_{21}/MFR_2$, im Bereich von 22 bis 50 und

(2) 0,1 bis 3,0 Gew.-% eines Polyethylenwachses, wobei sich die Komponenten (1) und (2) auf 100,0 Gew.-% addieren.

2. Zusammensetzung nach Anspruch 1, wobei die Ethylenpolymerkomponente (A) aus einer Ethylenpolymer-Fraktion (A-1) und (A-2) besteht, wobei die Dichte der Fraktionen (A-1) und (A-2) im Bereich von 920 bis 980 $kg/m^3$ liegt und der $MFR_2$ (190°C, 2,16 kg, ISO 1133) im Bereich von 2,0 bis 250 g/10 min liegt und wobei die Dichte und/oder der $MFR_2$ (190°C, 2,16 kg, ISO 1133) der Ethylenpolymerfraktionen (A-1) und (A-2) gleich oder unterschiedlich sein können.

3. Zusammensetzung nach Anspruch 1 oder 2, wobei die Ethylenpolymerkomponente (A) und das Ethylenpolymer (B) bevorzugt ein Copolymer aus Ethylen und einem Comonomer sind, das aus $C_4$- bis $C_{12}$-$\alpha$-Olefinen, stärker bevorzugt aus $C_4$- bis $C_8$-$\alpha$-Olefinen und stärker bevorzugt aus $C_4$- bis $C_6$-$\alpha$-Olefinen ausgewählt ist;
wobei sich das Comonomer der Ethylenpolymerkomponente (A) bevorzugt von dem Comonomer der Ethylenpolymerkomponente (B) unterscheidet, stärker bevorzugt ist die Ethylenpolymerkomponente (A) ein Ethylen-1-Buten-Polymer und die Ethylenpolymerkomponente (B) ein Ethylen-1-Hexen-Polymer.

4. Zusammensetzung nach einem der vorhergehenden Ansprüche, wobei die Ethylenpolymerkomponente (A) des Metallocen-katalysierten multimodalen Polyethylencopolymers (P) eine $MFR_2$ (190°C, 2,16 kg, ISO 1133) von 2,5 bis 100,0 g/10 min, bevorzugt von 3,0 bis 30,0 g/10 min, stärker bevorzugt von 3,5 bis 10,0 g/10 min aufweist und die Ethylenpolymerkomponente (B) des Metallocen-katalysierten multimodalen Polyethylencopolymers (P) eine $MFR_2$ (190°C, 2,16 kg, ISO 1133) von 0,05 bis 0,9 g/10 min, bevorzugt von 0,08 bis 0,8 g/10 min und stärker bevorzugt von 0,1 bis 0,7 g/10 min aufweist.

5. Zusammensetzung nach einem der vorhergehenden Ansprüche, wobei das multimodale Copolymer (P) ein Verhältnis des $MFR_{21}$ (190°C, 21,6 kg, ISO 1133) zu $MFR_2$ (190°C, 2,16 kg, ISO 1133), $MFR_{21}/MFR_2$, im Bereich von 22 bis 50, bevorzugt von 25 bis 40, stärker bevorzugt von 26 bis 35 und/oder
ein Verhältnis des $MFR_2$ (190°C, 2,16 kg, ISO 1133) der Ethylenpolymerkomponente (A) zum $MFR_2$ (190°C, 2,16 kg, ISO 1133) des endgültigen multimodalen Copolymers (P) von mindestens 1,6 bis 40,0, bevorzugt 2,0 bis 30,0,

stärker bevorzugt 2,5 bis 20,0 und noch stärker bevorzugt 3,0 bis 10,0 aufweisen.

**6.** Zusammensetzung nach einem der vorhergehenden Ansprüche, wobei das multimodale Copolymer (P) in Gegenwart eines Metallocenkomplexes der Formel (I) hergestellt wird:

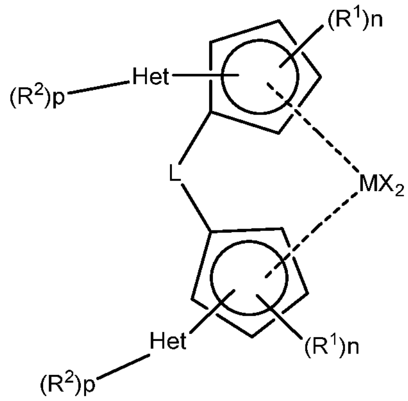

(I)

wobei jedes X unabhängig ein Halogenatom, eine $C_{1-6}$-Alkyl-, $C_{1-6}$-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L -$R'_2$Si-ist, wobei jedes R' unabhängig $C_{1-20}$-Kohlenwasserstoff oder $C_{1-10}$-Alkyl substituiert mit Alkoxy mit 1 bis 10 Kohlenstoffatomen ist;
M Ti, Zr oder Hf ist;
jedes $R^1$ gleich oder unterschiedlich ist und eine $C_{1-6}$-Alkylgruppe oder $C_{1-6}$-Alkoxygruppe ist;
jedes n 1 bis 2 ist;
jedes $R^2$ gleich oder unterschiedlich ist und eine $C_{1-6}$-Alkylgruppe, $C_{1-6}$-Alkoxygruppe oder -Si(R)$_3$-Gruppe ist;
jedes Reine $C_{1-10}$-Alkyl- oder Phenylgruppe ist, die optional mit 1 bis 3 $C_{1-6}$-Alkylgruppen substituiert ist; und
jedes p 0 bis 1 ist.

**7.** Zusammensetzung nach einem der vorhergehenden Ansprüche, wobei die Menge des zugesetzten Polyethylenwachses im Bereich von 0,2 bis 2,5 Gew.-%, bevorzugt 0,3 bis 2,0 Gew.-% und stärker bevorzugt 0,4 bis 1,5 Gew.-% liegt.

**8.** Zusammensetzung nach einem der vorhergehenden Ansprüche, wobei das Polyethylenwachs ein Homopolymer von Ethylen, ein Copolymer von Ethylen und einem $\alpha$-Olefin oder ein Mischprodukt davon ist und unter Verwendung eines Ziegler-Natta-Katalysators oder eines Metallocen-Katalysators hergestellt werden kann.

**9.** Zusammensetzung nach einem der vorhergehenden Ansprüche, wobei das Polyethylenwachs ein gewichtsgemitteltes Molekulargewicht (bestimmt durch ein viskosimetrisches Verfahren) von 1000 bis 20000 g/mol, bevorzugt von 1500 bis 15000 und stärker bevorzugt von 2000 bis 10000 haben kann und/oder eine bei 140°C gemessene Schmelzviskosität im Bereich von 15 bis 10 000 mPa·s, bevorzugt im Bereich von 20 bis 8000 mPa·s, stärker bevorzugt im Bereich von 50 bis 7 000 mPa·s und noch stärker bevorzugt im Bereich von 60 bis 6 500 mPa·s aufweisen kann.

**10.** Zusammensetzung nach einem der vorhergehenden Ansprüche, wobei die Zusammensetzung kein Polymer-Verarbeitungshilfsmittel auf Fluorbasis enthält.

**11.** Zusammensetzung nach einem der vorhergehenden Ansprüche, wobei die Zusammensetzung eine verbesserte Verarbeitbarkeit aufweist, ausgedrückt durch eine kritische Scherrate (CSR), bestimmt nach ISO 11443, von mindestens 400 $s^{-1}$, bevorzugt von mindestens 410 $s^{-1}$ und besonders bevorzugt von mindestens 420 $s^{-1}$ bis zu 1200 $s^{-1}$, bevorzugt bis zu 1100 $s^{-1}$ und besonders bevorzugt bis zu 1000 $s^{-1}$.

**12.** Folie, enthaltend die Zusammensetzung nach einem der vorangehenden Ansprüche 1 bis 11.

**13.** Folie nach Anspruch 12, wobei die Folie **gekennzeichnet ist durch** eine Dart-Drop-Schlagzähigkeit (DDI), bestimmt

nach ASTM D1709, Verfahren A, an einer 40 µm-Monolayer-Test-Blasfolie von mindestens 300 g bis 2500 g, bevorzugt 500 g bis 2300 g, stärker bevorzugt 700 g bis 2000 g und stärker bevorzugt 800 bis 1800 g.

**14.** Folie nach Anspruch 12 oder 13, wobei die Folie durch einen Reibungskoeffizienten (CoF) als Maß für das Reibungsverhalten der Folie (bestimmt nach einem Verfahren gemäß ISO 8295) von unter 0,83, bevorzugt im Bereich von 0,50 bis 0,82, gekennzeichnet ist.

**15.** Verwendung einer Folie nach einem der vorhergehenden Ansprüche 12 bis 14 als Verpackungsmaterial, insbesondere als Verpackungsmaterial für Lebensmittel und/oder medizinische Produkte.

## Revendications

**1.** Composition de polymère de polyéthylène comprenant

(1) 97,0 à 99,9 % en poids d'un copolymère de polyéthylène multimodal à catalyse métallocène (P), qui est constitué de

(i) 30,0 à 60,0 % en poids d'un composant de polymère d'éthylène (A), et
(ii) 40,0 à 70,0 % en poids d'un composant de polymère d'éthylène (B),
dans laquelle le composant de polymère d'éthylène (A) a
une masse volumique dans la plage de 920 à 980 kg/$m^3$,
un $MFR_2$ (190 °C, 2,16 kg, ISO 1133) dans la plage de 2,0 à 250,0 g/10 min,
le composant de polymère d'éthylène (B) a
une masse volumique dans la plage de 880 à 970 kg/$m^3$,
un $MFR_2$ (190 °C, 2,16 kg, ISO 1133) dans la plage de 0,01 à 1,0 g/10 min ;
dans laquelle le copolymère de polyéthylène multimodal (P) a
une masse volumique dans la plage de 910 à 970 kg/$m^3$,
un $MFR_2$ (190 °C, 2,16 kg, ISO 1133) dans la plage de 0,1 à 3,0 g/10 min et
un rapport du $MFR_{21}$ (190 °C, 21,6 kg, ISO 1133) au $MFR_2$ (190 °C, 2,16 kg, ISO 1133), $MFR_{21}/MFR_2$, dans la plage de 22 à 50 et

(2) 0,1 à 3,0 % en poids d'une cire de polyéthylène, dans laquelle la somme des composants (1) et (2) est de jusqu'à 100,0 % en poids.

**2.** Composition selon la revendication 1, dans laquelle le composant de polymère d'éthylène (A) est constitué d'une fraction de polymère d'éthylène (A-1) et (A-2), dans laquelle la masse volumique des fractions (A-1) et (A-2) est dans la plage de 920 à 980 kg/$m^3$ et le $MFR_2$ (190 °C, 2,16 kg, ISO 1133) est dans la plage de 2,0 à 250 g/10 min et dans laquelle la masse volumique et/ou le $MFR_2$ (190 °C, 2,16 kg, ISO 1133) des fractions de polymère d'éthylène (A-1) et (A-2) peuvent être identiques ou peuvent être différentes.

**3.** Composition selon la revendication 1 ou 2, dans laquelle le composant de polymère d'éthylène (A) et le polymère d'éthylène (B) sont de préference un copolymère d'éthylène et un comonomère étant choisi parmi des α-oléfines en $C_4$ à $C_{12}$, plus préférablement des α-oléfines en $C_4$ à $C_8$ et encore plus préférablement des α-oléfines en $C_4$ à $C_6$ ; de préférence, le comonomère de composant de polymère d'éthylène (A) est différent du comonomère de composant de polymère d'éthylène (B), plus préférablement, le composant de polymère d'éthylène (A) est, par conséquent, un polymère d'éthylène-1-butène et le composant de polymère d'éthylène (B) est un polymère d'éthylène-1-hexène.

**4.** Composition selon l'une quelconque des revendications précédentes, dans laquelle le composant de polymère d'éthylène (A) du copolymère de polyéthylène multimodal à catalyse métallocène (P) a un $MFR_2$ (190°C, 2,16 kg, ISO 1133) de 2,5 à 100,0 g/10 min, de préférence de 3,0 à 30,0 g/10 min, plus préférablement de 3,5 à 10,0 g/10 min et le composant de polymère d'éthylène (B) du copolymère de polyéthylène multimodal à catalyse métallocène (P) a un $MFR_2$ (190°C, 2,16 kg, ISO 1133) de 0,05 à 0,9 g/10 min, de préférence de 0,08 à 0,8 g/10 min et plus préférablement de 0,1 à 0,7 g/10 min.

**5.** Composition selon l'une quelconque des revendications précédentes, dans laquelle le copolymère multimodal (P) a un rapport du $MFR_{21}$ (190 °C, 21,6 kg, ISO 1133) au $MFR_2$ (190°C, 2,16 kg, ISO 1133), $MFR_{21}/MFR_2$, dans la plage de 22 à 50, de préférence de 25 à 40, plus préférablement de 26 à 35 et/ou

un rapport du $MFR_2$ (190°C, 2,16 kg, ISO 1133) du composant de polymère d'éthylène (A) au $MFR_2$ (190°C, 2,16 kg, ISO 1133) du copolymère multimodal final (P) d'au moins 1,6 à 40,0, de préférence 2,0 à 30,0, plus préférablement 2,5 à 20,0 et encore plus préférablement 3,0 à 10,0.

**6.** Composition selon l'une quelconque des revendications précédentes, dans laquelle le copolymère multimodal (P) est produit en présence d'un complexe de métallocène de formule (I) :

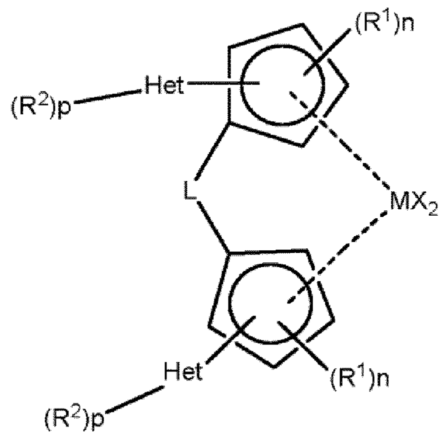

(I)

dans laquelle chaque X est indépendamment un atome d'halogène, un groupe alkyle en $C_{1-6}$, alcoxy en $C_{1-6}$, un groupe phényle ou benzyle ;
chaque Het est indépendamment un groupe hétéroaromatique monocyclique contenant au moins un hétéroatome choisi parmi O ou S ;
L est $-R'_2Si-$, dans lequel chaque R' est indépendamment hydrocarbyle en $C_{1-20}$ ou alkyle en $C_{1-10}$ substitué par alcoxy ayant 1 à 10 atomes de carbone ;
M est Ti, Zr ou Hf ;
chaque $R^1$ est identique ou différent et est un groupe alkyle en $C_{1-6}$ ou un groupe alcoxy en $C_{1-6}$ ; chaque n est 1 à 2 ;
chaque $R^2$ est identique ou différent et est un groupe alkyle en $C_{1-6}$, un groupe alcoxy en $C_{1-6}$ ou un groupe $-Si(R)_3$ ;
chaque R est un groupe alkyle en $C_{1-10}$ ou phényle facultativement substitué par 1 à 3 groupe alkyle en $C_{1-6}$s ; et chaque p est 0 à 1.

**7.** Composition selon l'une quelconque des revendications précédentes, dans laquelle la quantité de cire de polyéthylène ajoutée est dans la plage de 0,2 à 2,5 % en poids, de préférence 0,3 à 2,0 % en poids et plus préférablement 0,4 à 1,5 % en poids.

**8.** Composition selon l'une quelconque des revendications précédentes, dans laquelle la cire de polyéthylène est un homopolymère d'éthylène, un copolymère d'éthylène et une $\alpha$-oléfine, ou un produit mélangé de ceux-ci et peut être préparée au moyen d'un catalyseur de Ziegler-Natta ou au moyen d'un catalyseur métallocène.

**9.** Composition selon l'une quelconque des revendications précédentes, dans laquelle la cire de polyéthylène peut avoir un poids moléculaire moyen en poids (déterminé par un procédé viscosimétrique) de 1000 à 20000 g/mol, de préférence 1500 à 15000 et plus préférablement 2000 à 10000 et/ou peut avoir une viscosité à l'état fondu mesurée à 140 °C dans la plage de 15 à 10 000 mPa.s, de préférence dans la plage de 20 à 8 000 mPa.s, plus préférablement dans la plage de 50 à 7 000 mPa.s et encore plus préférablement dans la plage de 60 à 6 500 mPa.s.

**10.** Composition selon l'une quelconque des revendications précédentes, la composition ne contenant aucun adjuvant de traitement polymère à base de fluor.

**11.** Composition selon l'une quelconque des revendications précédentes, la composition ayant une aptitude au traitement améliorée exprimée par un taux de cisaillement critique (CSR) déterminé selon ISO 11443 d'au moins 400 $s^{-1}$, de préférence d'au moins 410 $s^{-1}$, et plus préférablement d'au moins 420 $s^{-1}$ jusqu'à 1200 s-', de préférence jusqu'à 1100 $s^{-1}$ et plus préférablement jusqu'à 1000 $s^{-1}$.

**12.** Film comprenant la composition selon l'une quelconque des revendications précédentes 1 à 11.

**13.** Film selon la revendication 12, le film étant **caractérisé par** une résistance aux chocs par chute libre de projectile (DDI) déterminée selon ASTM D1709, procédé A sur un film soufflé d'essai monocouche de 40 μm d'au moins 300 g jusqu'à 2500 g, de préférence de 500 g à 2300 g, plus préférablement de 700 g à 2000 g et encore plus préférablement de 800 à 1800 g.

**14.** Film selon la revendication 12 ou 13, le film étant **caractérisé par** un coefficient de frottement (CoF) en tant que mesure du comportement de frottement du film (déterminé au moyen d'un procédé selon ISO 8295) inférieur à 0,83, de préférence dans la plage de 0,50 à 0,82.

**15.** Utilisation d'un film selon l'une quelconque des revendications précédentes 12 à 14 en tant que matériau d'emballage, en particulier en tant que matériau d'emballage pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- WO 2016198273 A